# EUROPEAN PATENT SPECIFICATION

(11) **EP 1 347 892 B1**
(45) Date of publication and mention of the grant of the patent: **19.01.2005**
(21) Application number: 01963660.4
(22) Date of filing: 05.09.2001
(51) Int. Cl.: B60R 19/26, B60R 19/34

(54) **A BUMPER BEAM ARRANGEMENT**
STOSSFÄNGERTRÄGERANORDNUNG
EQUIPEMENT DE POUTRE DE PARE-CHOCS

(30) Priority: 20.09.2000 SE 0003419
(43) Date of publication of application: 01.10.2003
(73) Proprietor: SSAB HARDTECH AB, 971 88 Lulea (SE)
(72) Inventor: WIKSTRÖM, Lars, S-972 42 Lulea (SE)
(74) Representative: Aslund, Roland
(86) International application number: PCT/SE2001/001887
(87) International publication number: WO 2002/024488

(56) References cited:
- DE-A1- 10 000 747
- DE-A1- 19 904 879
- DE-A1- 19 958 887

## Description

### Technical field

This invention relates to a bumper beam arrangement for a vehicle, comprising a bumper beam that has an open profile with a top end and two sides, wherein the beam is mounted on two crash boxes, which protrude into the profile and are mounted to the top end of the profile,

### Description of prior art

To mount bumper beams in crash boxes is known for example from EP-0763448 A1, DE-19537186 A1, DE-4127381 A1, and US-3998485 A1. The crash boxes take up energy in a crash by being plastically deformed axially. The strength of the crash boxes can be designed for high-speed crashes, but crash boxes can alternatively be designed for low speed crashes.

US-3998485 A1 shows a bumper beam arrangement according to the preamble of claim 1, comprising crash boxes for low speed crashes in the form of tubes with a constant cross section, in which a bumper beam with a U-formed cross section is mounted. When a crash box is axially compressed, the two sides of the bumper beam will be forced into the body of the vehicle and cause damages also in a crash at very low speed. In a light offset crash on one of the crash boxes, this crash box will be axially compressed while the bumper beam will practically not be deformed. Yet, the bumper beam will damage the vehicle body. Conical crash boxes are shown at the rear of the tube formed crash boxes and these conical crash boxes are adapted not to be deformed until the tube formed crash boxes have been compressed.

### Object of invention

It is an object of the invention to reduce the risk of damage on the body in low velocity crashes and in particular in such offset crashes. To this end, the crash boxes taper off and protrudes into the profile with their narrow ends so that the crash boxes force the sides of the profile to widen the profile and make it flatter when the crash boxes are axially compressed. The invention is defined by the claims.

### Brief description of the drawings

- **Figure 1** is a top view of a bumper beam of a passenger vehicle, mounted to the vehicle in accordance with the invention.
- **Figure 2** is a section taken along the line 2 - 2 in figure 1 and it shows one of two crash boxes shown in figure 1.
- **Figures 3 - 6** correspond to figure 2, but they are shown in various stages of compression of the crash box shown in figure 2 when the bumper beam hits a barrier.

### Description of the preferred embodiment

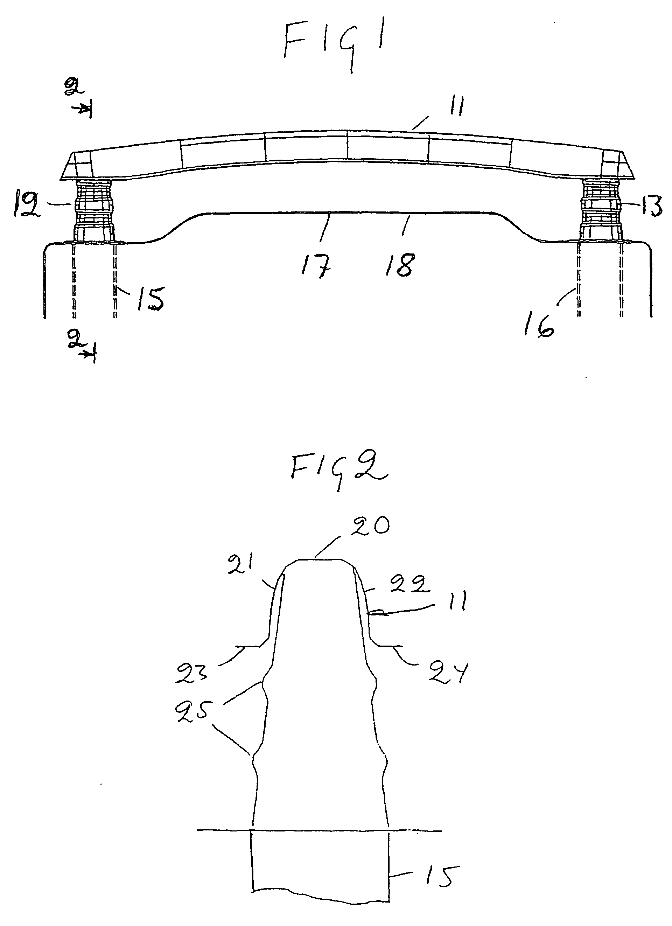

**Figure 1** shows one end of a vehicle, for example a passenger car, which has a bumper beam 11 mounted in two crash boxes 12,13, which are mounted in a structural part of the vehicle body. In the figures, the crash boxes are shown mounted on the ends of the side rails (side beams) 15,16 of the vehicle body. In the figure, a panel 17 is shown, which may be a front panel or a rear panel of the vehicle and such a panel has often an enlargement 18 in the middle so as to give place for a radiator or a spare wheel. The bumper beam is usually curved as shown in order to give place for such an enlargement 18. A non-illustrated shell of plastics usually hides the bumper beam.

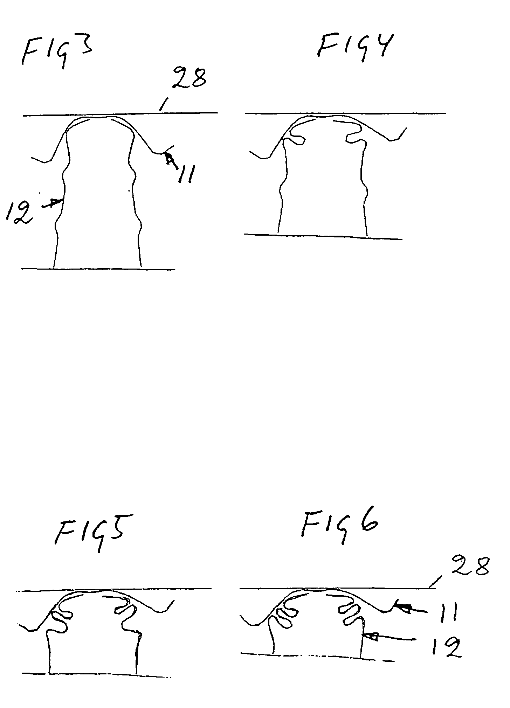

**Figure 2** is a section through the crash box 12 and the bumper beam 11 and it is taken along line 2-2 in figure 1. The bumper beam 11 has an open profile shown as a hat profile with a crown comprising a top or central flange 20 and two sides or webs 21,22 that end in two side flanges (brims) 23,24. The bumper beam 11 is mounted with its top end 20 in one end of the crash box 12 so that the crash box extends into the bumper beam and fills out a major part of the cross section of the bumper beam. The crash box 12 may have a round, rectangular or square cross section and it widens towards its mounting to the vehicle as shown so that it is wider at its base than the distance between the two sides of the bumper beam. It has deformation guides 25.

The **figures 3 - 6** show in a sequence the compression of the crash box 12 when the bumper beam hits a barrier 28. The crash box folds and the folds forces the sides 21,22 of the bumper beam outwards so that the bumper beam flattens out. Therefore, the sides of the bumper beam will not hit the panel 17. In low velocity crashes and in particular in low velocity off-set crashes on only one of the crash boxes, the crash box and the bumper beam will be the only parts that are damaged. The other parts of the vehicle, that is, the panel 17 in figure 1, will not be damaged.

## Claims

1. A bumper beam arrangement for a vehicle, comprising a bumper beam (11) that has an open profile with a top end (20) and two sides (21,22), wherein the beam is mounted on two crash boxes (12,13), which are mounted to the vehicle body and protrude into the profile and are fastened to the top end (20) of the profile,
**characterised in that** the crash boxes (12,13) taper off and protrude into the profile with their tapered narrow ends so that the crash boxes force the sides of the profile (21,22) to widen the profile and make it flatter when the crash boxes are axially. compressed.

2. The bumper beam arrangement according to claim 1, **characterised in that** the beam (11) has a hat profile.

## Patentansprüche

1. Stoßfängerträgeranordnung für ein Fahrzeug, mit einer Stoßstange(11) mit offenem Profil mit einem oberen Ende (20) und zwei Seiten (21,22), wobei die Stoßstange auf zwei Crash-Boxen (12,13) montiert ist, die an den Fahrzeugkörper montiert sind und in das Profil ragen und am oberen Ende (20) des Profils befestigt sind, **gekennzeichnet dadurch dass** die Crash-Boxen (12,13) zulaufen und mit ihren zulaufenden enge Enden in das Profil ragen, so dass die Crash-Boxen die Seiten des Profils (21,22) dazu zwingen, das Profil zu erweitern und es flacher zu machen, wenn die Crash-Boxen axial komprimiert werden.

2. Stoßfängerträgeranordnung nach Anspruch 1, **gekennzeichnet dadurch, dass** die Stoßstange (11) ein Hutprofil hat.

## Revendications

1. Un équipement de poutre de pare-chocs pour un véhicule, comprenant une poutre de pare-chocs (11) dont le profil est ouvert avec une extrémité supérieure (20) et deux côtés (21, 22), où la poutre est montée sur deux boîtes anti-chocs (12, 13), qui sont montées sur la carrosserie du véhicule et font saillie dans le profil et sont attachées à l'extrémité de la partie supérieure (20) du profil, **caractérisé en ce que** les boîtes anti-chocs (12, 13) se terminent en pointe et font saillie dans le profil avec leurs extrémités étroites effilées de manière telle que les boîtes anti-chocs forcent les côtés du profil (21, 22) pour élargir le profil et le rendre plus ample quand les boîtes anti-chocs sont comprimées axialement.

2. L'équipement de poutre de pare-chocs selon la revendication 1, **caractérisé en ce que** la poutre (11) a la forme d'un chapeau.
